# EUROPEAN PATENT SPECIFICATION

(11) **EP 2 256 849 B1**
(45) Date of publication and mention of the grant of the patent: **26.03.2014**
(21) Application number: 10164033.2
(22) Date of filing: 27.05.2010
(51) Int. Cl.: H01M 8/04, H01M 8/06, H01M 8/24, C01B 3/38

(54) **Solid oxide fuel cell device**
Festoxid-Brennstoffzellenvorrichtung
Dispositif à pile à combustible d'oxyde solide

(30) Priority: 28.05.2009 JP 2009129163
(43) Date of publication of application: 01.12.2010
(73) Proprietor: TOTO LTD., Kitakyushu-shi Fukuoka 802-8601 (JP)
(72) Inventor: Shigezumi, Tsukasa, Kitakyushu-shi, Fukuoka 802-8601 (JP); Ooe, Toshiharu, Kitakyushu-shi, Fukuoka 802-8601 (JP); Tsuchiya, Katsuhisa, Kitakyushu-shi, Fukuoka 802-8601 (JP); Nakano, Kiyotaka, Kitakyushu-shi, Fukuoka 802-8601 (JP); Kawamura, Yoshiyuki, Kitakyushu-shi, Fukuoka 802-8601 (JP)
(74) Representative: Witte, Weller & Partner Patentanwälte mbB

(56) References cited:
- EP-A1- 1 408 003
- EP-A1- 1 808 927
- EP-A1- 1 840 997
- WO-A1-2009/028327
- WO-A2-02/05363
- JP-A- 2007 128 717
- US-A1- 2008 248 342

## Description

### BACKGROUND OF THE INVENTION

### Technical Field

The present invention relates to a solid oxide fuel cell ("SOFC" below) device, and more particularly to a solid oxide fuel cell device for generating power by reacting fuel gas with air.

### Description of the Related Art

Solid oxide fuel cell (SOFC) device operates at relatively high temperature, using an oxide ion conducting solid electrolyte as an electrolyte, with electrodes placed on each side thereof, and with fuel gas supplied to one side thereof and an oxidant (air, oxygen, or the like) supplied to the other side thereof.

In such SOFC, steam or CO₂ is produced by the reaction between oxygen ions and fuel passed through the oxide ion conducting solid electrolyte, thereby generating power and thermal energy. The electrical power is removed from the SOFC device, where it is used for various electrical purposes. The thermal energy is transferred to the fuel, the SOFC device, the oxidant, and the like, and is used to raise the temperature thereof.

In a conventional SOFC, the power generating chamber is disposed beneath a sealed space within the fuel cell module, and a fuel cell assembly furnished with multiple fuel cells is disposed within this power generating chamber. A combustion chamber is formed above this fuel cell assembly; residual fuel gas and oxidant gas (air) combust directly in the upper portion itself of the fuel cell assembly, and exhaust gas is produced within the combustion chamber.
A reformer for reforming fuel gas into hydrogen is disposed at the top of the combustion chamber, and the reformer is heated by the heat of combustion within the combustion chamber to a temperature sufficient to perform reforming.

However, in the conventional SOFC of this type, other than directly combusting the residual fuel gas and oxidant gas at the top portion itself of the fuel cell assembly, no heating means such as a burner was provided to separately heat the combustion chamber or the reformer, or to ignite fuel gas at the upper portion of the fuel cell assembly during cold starts in order to start the fuel cell module at essentially the outside temperature or a temperature below the outside temperature, or to support the prevention of flameout or blow out after ignition, and so forth. It was therefore extremely difficult to perform reliable uniform ignition over the entirety of the multiple fuel cells which may exceed 100 in number, due to formation defects in the ignition portion caused by variability in the structure of the cell itself, and in particular, the effects of unstable air flows within the combustion chamber when cold starting the fuel cell module at a temperature which is essentially equal to or below the outside temperature; even if ignition occurs, flameout can occur due to the slight disturbances in air flow and the like, making it extremely difficult to achieve a stable ignition or maintain an ignited state.

To suppress ignition deficiencies of this type, it has been proposed in Japanese Patent Unexamined Publication No. 2008-135268 (JP-2008-135268A) and the like that such ignition problems caused by air flow could be suppressed by reducing the supply flow rate of the air which threatens to blow out the flame when the fuel cell ignites.

Further fuel cell systems are for example known from documents WO 2009/028327 A1 and JP 2007 128 717 A.

### SUMMARY OF THE INVENTION

However, the present inventors have found that when the flow rate of air supplied to the fuel cells is reduced as a countermeasure to suppress ignition problems in the aforementioned JP-2008-135268A at the time of ignition, i.e., immediately prior to fuel cell ignition, it is not possible to form a stable air flow over the entirety of the multiple fuel cells, and even if ignition occurs in a portion of the multiple cells, it is difficult to cause the ignited flame to ride the air flow and diffuse across all of the remaining cells. Increasing the air volume after ignition may cause increased air flow turbulence, leading to the significant problem that ignition is easily extinguished in the upper portion of the cells, where ignition characteristics are poor.
Thus in the aforementioned JP-2008-135268A, while there is an increase of the flow rate of fuel supplied to the fuel cell during ignition, there is no disclosure or suggestion of a technical approach to stabilize air flow, and the new problem described above is not resolved.

It is therefore an object of the present invention to provide a solid oxide fuel cell (SOFC) device capable of reliably suppressing ignition problems and reliably preventing flameout subsequent to ignition using a simple structure, without employing countermeasures such as modifying the fuel cell assembly (fuel cell) structure itself to facilitate ignition.

The above object is achieved according to the present invention by providing a solid oxide fuel cell device according to claim 1, for generating power by reacting fuel gas and air, comprising: a fuel cell assembly furnished with multiple solid electrolyte-type fuel cells; a reformer disposed above the fuel cell assembly for steam reforming fuel gas and supplying the fuel gas to the fuel cell assembly; means for supplying the fuel gas to the reformer; means for producing pure water and supplying the pure water to the reformer; means for supplying reforming air to the reformer; means for supplying power generating air to the fuel cell assembly; means for igniting and combusting the fuel gas supplied to the bottom portion of the fuel cell assembly and reaching the top portion of the fuel cell assembly; and means for controlling the fuel gas supply means, the water supply means, the reforming air supply means, the power generating air supply means, and the igniting means to conduct a combustion operation to ignite and combust the fuel gas and the reforming air by the ignition means, then supply the fuel gas and the reforming air into the reformer to conduct a partial oxidation reforming reaction (POX) operation, then supply the fuel gas, the reforming air and water into the reformer to conduct an auto-thermal reforming reaction (ATR) operation, and then supply the fuel gas and water into the reformer to conduct a steam reforming reaction (SR) operation, thereby starting the solid oxide fuel cell device; wherein the control means controls the fuel gas supply means to hold constant the supply flow rate of fuel gas during a predetermined interval containing an ignition timing, controls the ignition means to ignite the fuel gas at the middle of the predetermined interval, and controls the fuel gas supply means to reduce the supply flow rate of fuel gas after an elapse of the predetermined interval.
In the present invention thus constituted, the control means controls the fuel gas supply means to hold constant the supply flow rate of fuel gas during a predetermined interval including an ignition timing, controls the igniting means to ignite the fuel gas at the middle of the predetermined interval, and controls the fuel gas supply means to reduce the supply flow rate of fuel gas after an elapse of the predetermined interval. Therefore fuel gas becomes even more concentrated than after the elapse of the predetermined interval, even in the upper portion of the fuel cell assembly where ignition is difficult to achieve, thereby making it easier to perform direct ignition. Next, the control means controls the fuel gas supply means to hold constant the supply flow rate of fuel gas during a predetermined interval including an ignition timing, controls the igniting means to ignite the fuel gas at the middle of the predetermined interval, therefore, for example, air flow in the combustion chamber can be stabilized, flameout or blow out caused by changes in unstable air flow after ignition can be prevented, and the diffusion of flame to each of the other cells in the fuel cell assembly can be facilitated. As a result, when any of the cells among the multiple fuel cells is ignited, the flame is caused to move to the other fuel cells therein in conjunction with the interaction of the concentrated fuel. The control means controls the fuel gas supply device to hold constant the supply flow rate of fuel gas during a predetermined interval including an ignition timing, controls the igniting means to ignite the fuel gas at the middle of the predetermined interval, therefore changes in fuel gas flow volume can be suppressed, and air flows in the combustion chamber can be stabilized, greatly facilitating ignition. Note that during the predetermined interval constant fuel gas supply flow rate is held to stabilize air flow, but there is a risk that if ignition occurs immediately following the start of the predetermined interval, the air flow will still not be sufficiently stable, and ignition may be difficult. If ignition occurs immediately prior to the end of the predetermined interval, air flow does change immediately following ignition, but there is a risk of immediate flameout due to changes in air flow caused by an insufficient temperature rise immediately following ignition. By performing ignition at the middle of the predetermined interval, the effects of air flow prior to the predetermined interval and of air flow changes following the predetermined interval can be suppressed, ignition can be more easily facilitated, and flameout following ignition can be prevented. Furthermore, ignition problems can be suppressed using a simple structure, without employing countermeasures such as modifying the fuel assembly structure itself to facilitate ignition, and unstable combustion caused by flameout following ignition, as well as the generation of CO, can be prevented.

In a preferred embodiment of the present invention, the solid oxide fuel cell device further comprises means for determining whether ignition has occurred in the fuel cell assembly, wherein the predetermined interval includes a first predetermined time starting before the time of the predetermined ignition timing and includes a second predetermined time after the determination by the ignition determining means that ignition has occurred.
In the present invention thus constituted, constant fuel gas supply flow rate is held until a predetermined time thereafter to stabilize ignition even if it is determined by the ignition determining means that the fuel cell assembly has ignited, therefore ignition can be reliably achieved and flameout due to changes in air flow caused by changes in the flow rate of fuel gas supplied immediately after ignition can be prevented.

In another preferred embodiment of the present invention, the predetermined interval includes an interval up until the temperature inside the reformer reaches or exceeds a predetermined temperature at which the partial oxidation reforming reaction (POX) operation is possible.
In the present invention thus constituted, constant supply flow rate of fuel gas is held until a high temperature around that at which partial oxidation reform can occur within the reformer is reached, and the supply flow rate of fuel gas is not varied during the low-temperature period when ignition is particularly difficult, i.e., during the entire combustion interval during which the temperature inside the reformer is raised by combusting unreformed fuel gas; therefore the air flow state can be stabilized and ignition can be reliably achieved. In addition, flame can be quickly diffused to all of the fuel cells to achieve complete ignition even if the fuel cell assembly is in a partially ignited state. Post-ignition combustion, which tends to be unstable, can be stabilized, and production of CO can be suppressed.

In still another preferred embodiment of the present invention, the control means controls the power generating air supply means to supply the power generating air during intervals of the combustion operation, the partial oxidation reforming reaction (POX) operation, the auto-thermal reforming reaction (ATR) operation, and the steam reforming reaction (SR) operation, and to supply a maximum and fixed flow rate of power generating air during at least the predetermined interval.
In the present invention thus constituted, power generating air is supplied by the generating air supply means during the combustion operating interval, the partial oxidation reforming reaction (POX) operating interval, the auto-thermal reforming reaction (ATR) operating interval, and the steam reforming reaction (SR) operating interval, and constant supply flow rate of fuel gas is held over a predetermined interval including an ignition timing during which ignition timing is at the middle of the predetermined interval, therefore ignition characteristics are good, and by supplying a maximum and fixed flow rate of power generating air in a state which maintains these favorable ignition conditions, the concentration of CO can be reduced to a safety level, even in an environment in which it is extremely difficult to suppress the generation of CO in the environment immediately above the cell, where ignition characteristics are poor. By adopting the philosophy of stabilizing air flow by maintaining a fixed flow rate of power generating air, the effects of increased air flow can be suppressed, flame diffusion characteristics can be improved, and complete ignition can be achieved in the upper portion of the fuel cell assembly.

In still another preferred embodiment of the present invention, the control means controls the reforming air supply means and the power generating air supply means to hold constant the supply flow rates of reforming air and power generating air during the interval of the combustion operation.
In the present invention thus constituted, the temperature of the reformer is raised by the combustion operation during the period of combustion, and because the temperature of the combustion chamber, the fuel cell, and the like are relatively low, when air flow inside the combustion chamber changes due to fluctuations in the flow rate of reforming air or power generating air supplied, ignition is placed in an unstable state whereby ignition becomes more difficult, or flameout may occur even if ignition occurs; therefore by maintaining a fixed supply flow rate of reforming air and generating air during the combustion operation interval when ignition is unstable, the air flow in the upper portion of the fuel cell assembly can be stabilized and reliable ignition characteristics can be assured, while post-ignition flameout can be prevented and flame diffusion characteristics can be improved.

In another preferred embodiment of the present invention, the control means controls the reforming air supply means and the power generating air supply means so that the supply flow rate of reforming air during the interval of the combustion operation is less than the supply flow rate of power generating air, and the supply flow rate of reforming air during the interval of the combustion operation is less than the supply flow rate of reforming air during the interval of the POX operation.
In the present invention thus constituted, even if CO is produced as a result of incomplete combustion during the combustion operation interval, more power generating air than reforming air is being supplied, therefore the concentration of CO can be reduced and flame diffusion in the fuel cell assembly can be maintained. By reducing the flow rate of reforming air while the flow rate of fuel gas supply is maintained at a fixed level, fuel gas can be concentrated in opposition to the tendency toward dilution, thus assuring reliable ignition characteristics in the upper portion of the fuel cell assembly where ignition characteristics are poor. If the flow rate of the supplied reforming air is increased during the combustion operation, when the partial oxide reforming reaction is not occurring, the fuel gas is diluted by such reforming air, since reforming air is not being consumed in the reformer, and fuel gas concentration is reduced, making ignition more difficult, but by reducing the flow of reforming air during the POX operation interval to be less than the flow rate of reforming air supplied during the fuel operation interval, a reduction in the concentration of fuel gas during the combustion operation interval can be prevented.

The solid oxide fuel cell (SOFC) device of the present invention enables the reliable suppression of ignition problems and the reliable prevention of post-ignition flameout using a simple structure, without the adoption of countermeasures such as modifying the structure itself of the fuel cell assembly (fuel cells) to facilitate ignition.

The above and other objects and features of the present invention will be apparent from the following description by taking reference with accompanying drawings employed for preferred embodiments of the present invention.

### BRIEF DESCRIPTION OF DRAWINGS

In the accompanying drawings:
Figure 1 is an overview schematic view showing a solid oxide fuel cell (SOFC) device according to an embodiment of the present invention;
Figure 2 is a front sectional view showing a solid oxide fuel cell (SOFC) device according to an embodiment of the present invention;
Figure 3 is a sectional view seen along a line III-III of Figure 2;
Figure 4 is a partial sectional view showing a fuel cell unit of a solid oxide fuel cell (SOFC) device according to an embodiment of the present invention;
Figure 5 is a perspective view showing a fuel cell stack of a solid oxide fuel cell (SOFC) device according to an embodiment of the present invention;
Figure 6 is a block diagram showing a solid oxide fuel cell (SOFC) device according to an embodiment of the present invention;
Figure 7 is a timing chart showing an operation upon startup of a solid oxide fuel cell (SOFC) device according to an embodiment of the present invention;
Figure 8 is a timing chart showing an operation upon stopping a solid oxide fuel cell (SOFC) device according to an embodiment of the present invention; and
Figure 9 is an operation table showing an example of a startup processing procedure for a solid oxide fuel cell (SOFC) device according to an embodiment of the present invention.

### DETAILED DESCRIPTION OF THE PREFERRED EMBODIMENTS

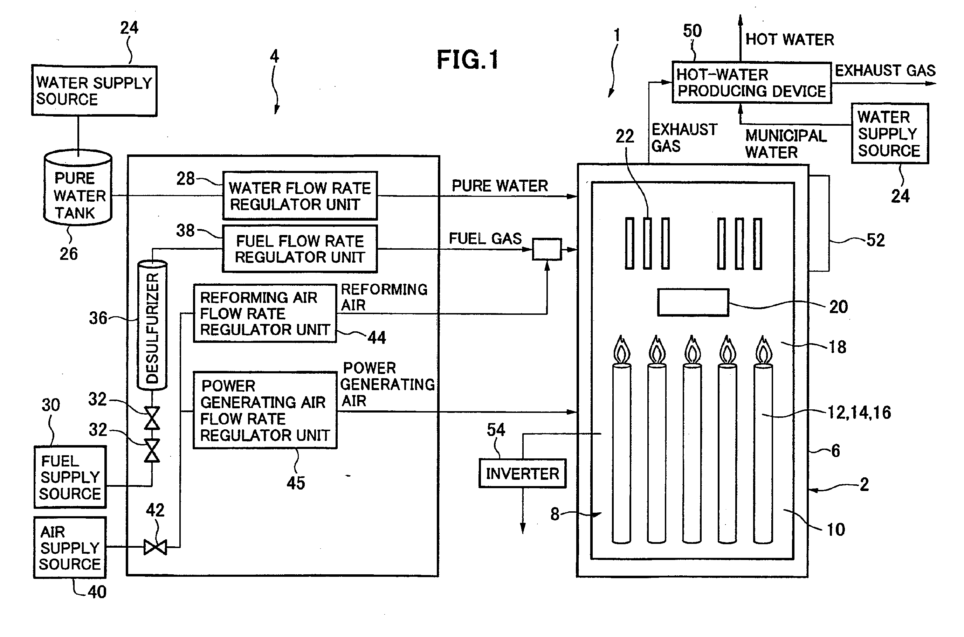

Next, referring to the attached drawings, a solid oxide fuel cell (SOFC) device according to an embodiment of the present invention will be explained.
As shown in Figure 1, a solid oxide fuel cell (SOFC) device according to an embodiment of the present invention is furnished with a fuel cell module 2 and an auxiliary unit 4.

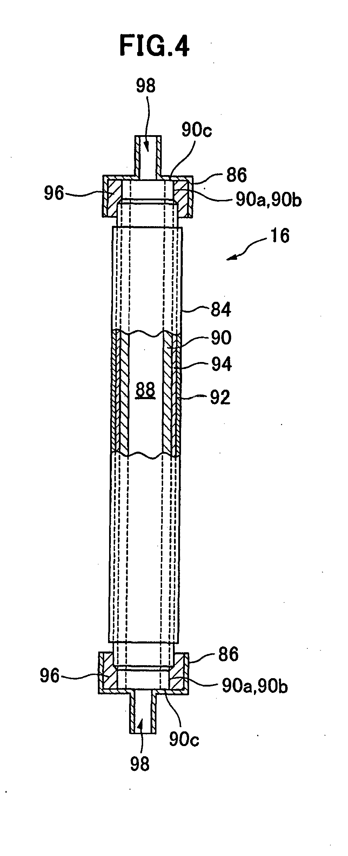

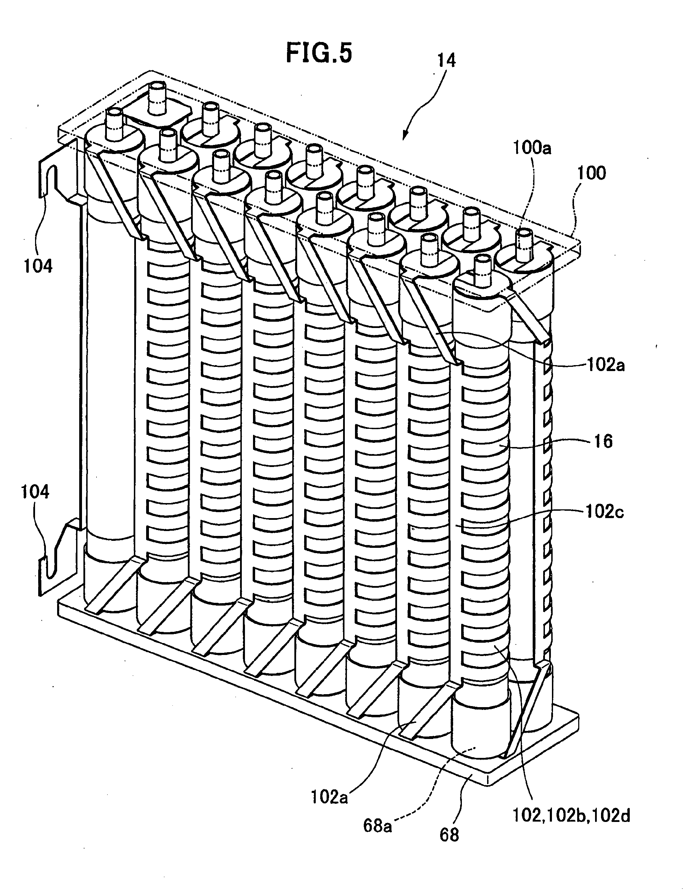

The fuel cell module 2 is furnished with a housing 6; a sealed space 8 is formed within the housing 6, mediated by insulating material (not shown, however the insulating material is not an indispensable structure and may be omitted). Note that it is acceptable to provide no insulating material. A fuel cell assembly 12 for carrying out the power generating reaction between fuel gas and oxidant (air) is disposed in the power generating chamber 10 at the lower portion of this sealed space 8. This fuel cell assembly 12 is furnished with ten fuel cell stacks 14 (see Fig. 5), and the fuel cell stack 14 comprises 16 fuel cell units 16 (see Fig. 4). Thus, the fuel cell assembly 12 has 160 fuel cell units 16, all of which are serially connected.

A combustion chamber 18 is formed above the aforementioned power generating chamber 10 in the sealed space 8 of the fuel cell module 2. Residual fuel gas and residual oxidant (air) not used in the power generation reaction is combusted in this combustion chamber 18 to produce exhaust gas.
A reformer 20 for reforming fuel gas is disposed at the top of the combustion chamber 18; the reformer 20 is heated by the heat of residual gas combustion to a temperature at which the reforming reaction can take place. An air heat exchanger 22 for receiving the heat of combustion and heating the air is further disposed above this reformer 20.

Next, the auxiliary unit 4 is furnished with a pure water tank 26 for holding water from a municipal or other water supply source 24 and filtering it into pure water, and a water flow rate regulator unit 28 (a "water pump" or the like driven by a motor) for regulating the flow rate (litter per minute) of water supplied from the reservoir tank. The auxiliary unit 4 is further furnished with a gas shutoff valve 32 for shutting off the fuel gas supply from a fuel supply source 30 such as municipal gas or the like, a desulfurizer 36 for desulfurizing the fuel gas, and a fuel gas flow rate regulator unit 38 (a "fuel pump" or the like driven by a motor) for regulating the flow rate (litter per minute) of fuel gas. Furthermore, an auxiliary unit 4 is furnished with an electromagnetic valve 42 for shutting off air serving as an oxidant and supplied from an air supply source 40, and a reforming air flow rate regulator unit 44 and generating air flow rate regulator unit 45 ("air blower" or the like driven by a motor) for regulating air flow rate (litter per minute).
Note that in the SOFC device according to the embodiment of the present invention, there is no heating means such as a heater for heating the reforming air supply to the reformer 20 or the power generating air supply to the power generating chamber 10 in order to efficiently raise the temperature at startup, nor is there a heating means for separately heating the reformer 20.

Next, a hot-water producing device 50 supplied with exhaust gas is connected to the fuel cell module 2. Municipal water from a water supply source 24 is supplied to this hot-water producing device 50; this water is turned into hot water by the heat of the exhaust gas, and is supplied to a hot water reservoir tank in an external water heater (not shown).
The fuel cell module 2 is provided with a control box 52 for controlling the supply flow rates of fuel gas and the like.
Furthermore, an inverter 54 serving as an electrical power extraction unit (electrical power conversion unit) for supplying electrical power generated by the fuel cell module to the outside is connected to the fuel cell module 2.

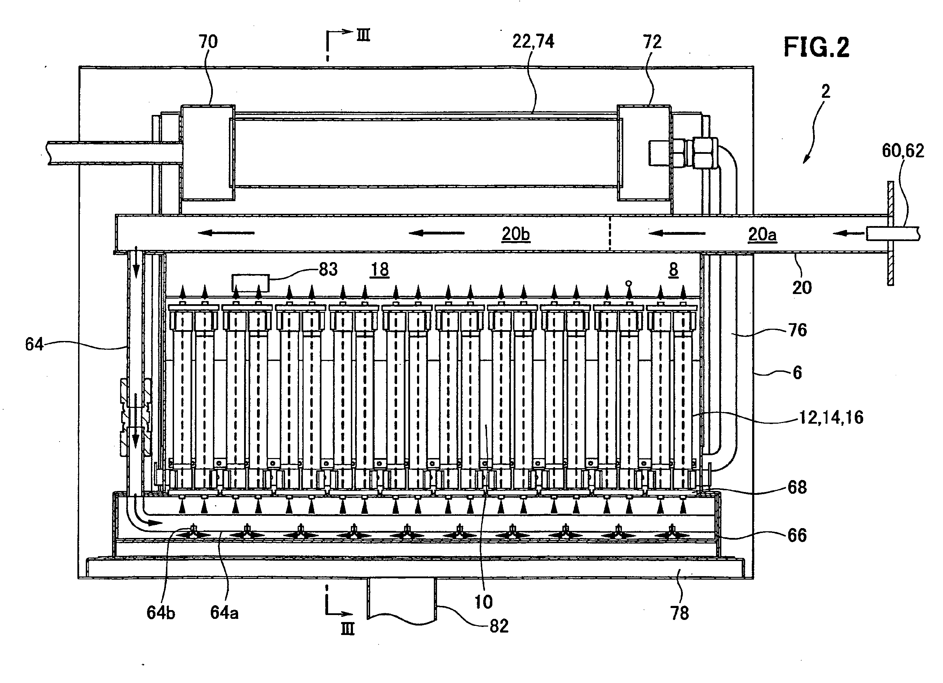

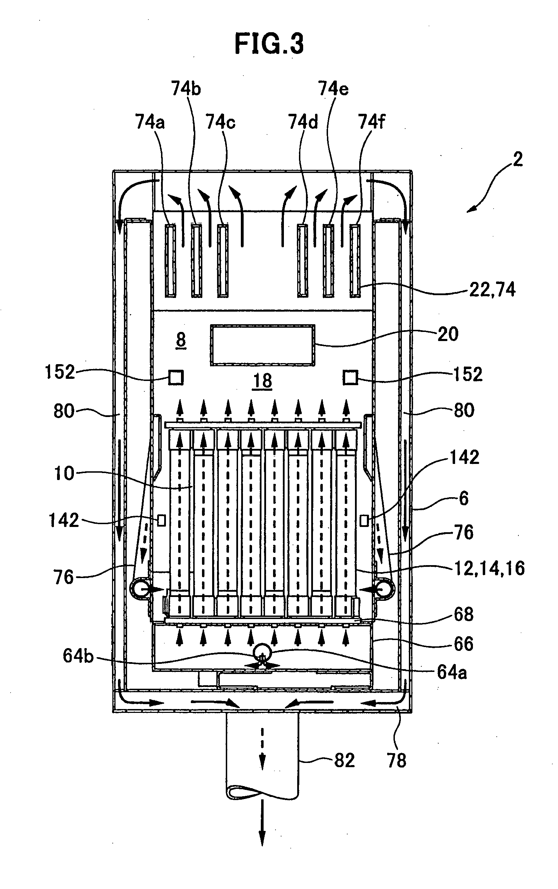

The internal structure of the solid oxide fuel cell (SOFC) device according to the embodiment of the present invention is explained using Figures 2 and 3.
As shown in Figures 2 and 3, a fuel cell assembly 12, a reformer 20, and an air heat exchanger 22 are arranged in sequence starting from the bottom in the sealed space 8 within the fuel cell module 2 housing 6, as described above.

A pure water guide pipe 60 for introducing pure water on the upstream end of the reformer 20, and a reform gas guide pipe 62 for introducing the fuel gas and reforming air to be reformed, are attached to the reformer 20; a vaporizing section 20a and a reforming section 20b are formed in sequence starting from the upstream side within the reformer 20, and the reforming section 20b is filled with a reforming catalyst. Fuel gas and air blended with the steam (pure water) introduced into the reformer 20 is reformed by the reforming catalyst used to fill in the reformer 20. Appropriate reforming catalysts are used, such as those in which nickel is imparted to the surface of alumina spheres, or ruthenium is imparted to alumina spheres.

A fuel gas supply line 64 is connected to the downstream end of the reformer 20; this fuel gas supply line 64 extends downward, then further extends horizontally within a manifold formed under the fuel cell assembly 12. Multiple fuel supply holes 64b are formed on the bottom surface of a horizontal portion 64a of the fuel gas supply line 64; reformed fuel gas is supplied into the manifold 66 from these fuel supply holes 64b.

A lower support plate 68 provided with through holes for supporting the above-described fuel cell stack 14 is attached at the top of the manifold 66, and fuel gas in the manifold 66 is supplied into the fuel cell unit 16.

An air heat exchanger 22 is provided over the reformer 20. The air heat exchanger 22 is furnished with an air concentration chamber 70 on the upstream side and two air distribution chambers 72 on the downstream side; the air concentration chamber 70 and the distribution chambers 72 are connected using six air flow conduits 74. Here, as shown in Figure 3, three air flow conduits 74 form a set (74a, 74b, 74c, 74d, 74e, 74f); air in the air concentration chamber 70 flows from each set of the air flow conduits 74 to the respective air distribution chambers 72.

Air flowing in the six air flow conduits 74 of the air heat exchanger 22 is preheated by rising combustion exhaust gas from the combustion chamber 18.
Air guide pipes 76 are connected to each of the respective air distribution chambers 72; these air guide pipes 76 extend downward, communicating at the bottom end side with the lower space in the generating chamber 10, and introducing preheated air into the generating chamber 10.

Next, an exhaust gas chamber 78 is formed below the manifold 66. As shown in Figure 3, an exhaust gas conduit 80 extending in the vertical direction is formed on the insides of the front surface 6a and the rear surface 6b which form the faces in the longitudinal direction of the housing 6; the top inside of the exhaust gas conduit 80 communicates with the space in which the air heat exchanger to rule 22 is disposed, and the bottom end side communicates with the exhaust gas chamber 78. An exhaust gas discharge pipe 82 is connected at approximately the center of the bottom surface of the exhaust gas chamber 78; the downstream end of the exhaust gas discharge pipe 82 is connected to the above-described hot water producing device 50 shown in Figure 1.
As shown in Fig. 2, an ignition device 83 for starting the combustion of fuel gas and air is disposed on the combustion chamber 18. No heating means such as a burner or the like for separately heating the combustion chamber 18 or the fuel cell unit 16 to support ignition at startup or prevent flameout or blow out is provided on the combustion chamber 18.

Next, referring to Figure 4, the fuel cell unit 16 will be explained. As shown in Figure 4, the fuel cell unit 16 is furnished with a fuel cell 84 and internal electrode terminals 86, respectively connected to the respective terminals at the top and bottom of the fuel cell 84.
The fuel cell 84 is a tubular structure extending in the vertical direction, furnished with a cylindrical internal electrode layer 90, on the inside of which is formed a fuel gas flow path 88, a cylindrical external electrode layer 92, and an electrolyte layer 94 between the internal electrode layer 90 and the external electrode layer 92. The internal electrode layer 90 is a fuel electrode through which fuel gas passes, and is a (-) pole, while the external electrode layer 92 is an air electrode for contacting the air, and is a (+) pole.

The internal electrode terminals 86 attached at the top and bottom ends of the fuel cell unit 16 have the same structure, therefore the internal electrode terminal 86 attached at the top end side will be specifically explained. The top portion 90a of the inside electrode layer 90 is furnished with an outside perimeter surface 90b and top end surface 90c, exposed to the electrolyte layer 94 and the outside electrode layer 92. The inside electrode terminal 86 is connected to the outer perimeter surface 90b of the inside electrode layer 90 through a conductive seal material 96, and is electrically connected to the inside electrode layer 90 by making direct contact with the top end surface 90c of the inside electrode layer 90. A fuel gas flow path 98 communicating with fuel gas flow path 88 in the inside electrode layer 90 is formed at the center portion of the inside electrode terminal 86.

The inside electrode layer 90 is formed, for example, from at least one of a mixture of Ni and zirconia doped with at least one type of rare earth element selected from among Ca, Y, Sc, or the like; or a mixture of Ni and ceria doped with at least one type of rare earth element; or any mixture of Ni with lanthanum gallate doped with at least one element selected from among Sr, Mg, Co, Fe, or Cu.

The electrolyte layer 94 is formed, for example, from at least one of the following: zirconia doped with at least one type of rare earth element selected from among Y, Sc, or the like; ceria doped with at least one type of selected rare earth element; or lanthanum gallate doped with at least one element selected from among Sr or Mg.

The outside electrode layer 92 is formed, for example, from at least one of the following: lanthanum manganite doped with at least one element selected from among Sr or Ca; lanthanum ferrite doped with at least one element selected from among Sr, Co, Ni, or Cu; lanthanum cobaltite doped with at least one element selected from among Sr, Fe, Ni, or Cu; Ag, or the like.

Next, referring to Figure 5, the fuel cell stack 14 will be explained. As shown in Figure 5, the fuel cell stack 14 is furnished with sixteen fuel cell units 16; the top sides and bottom sides of these fuel cell units 16 are respectively supported by a lower support plate 68 and upper support plate 100. Through holes 68a and 100a, through which the inside electrode terminal 86 can penetrate, are provided on the lower support plate 68 and upper support plate 100.

In addition, a current collector 102 and an external terminal 104 are attached to the fuel cell unit 16. The current collector 102 is integrally formed by a fuel electrode connecting portion 102a, which is electrically connected to the inside electrode terminal 86 attached to the inside electrode layer 90 serving as the fuel electrode, and by an air electrode connecting portion 102b, which is electrically connected to the entire external perimeter of the outside electrode layer 92 serving as the air electrode. The air electrode connecting portion 102b is formed of a vertical portion 102c extending vertically along the surface of the outside electrode layer 92, and multiple horizontal portions 102d extending in the horizontal direction from the vertical portion 102c along the surface of the outside electrode layer 92. The fuel electrode connecting portion 102a extends linearly in an upward or downward diagonal direction from the vertical portion 102c of the air electrode connecting portion 102b toward the inside electrode terminals 86 positioned in the upper and lower directions on the fuel cell unit 16.

Furthermore, inside electrode terminals 86 at the top and bottom ends of the two fuel cell units 16 positioned at the end of the fuel cell stack 14 (at the front and back sides on the left edge in Figure 5) are respectively connected to the external terminals 104. These external terminals 104 are connected to the external terminals 104 (not shown) at the ends of the adjacent fuel cell stack 14, and as described above, all of the 160 fuel cell units 16 are connected in series.

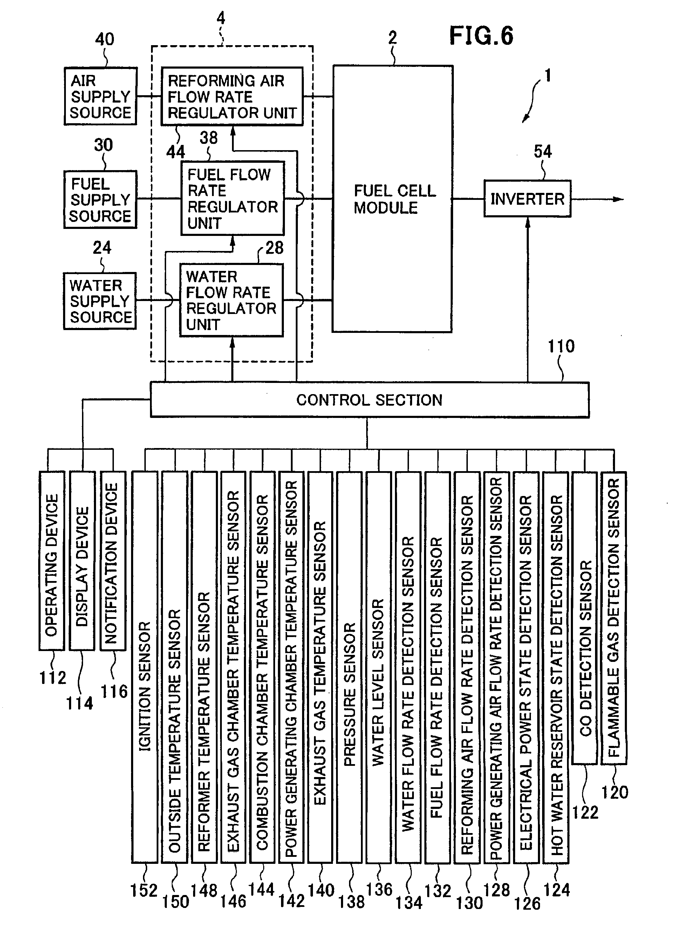

Next, referring to Figure 6, the sensors attached to the solid oxide fuel cell (SOFC) device according to the embodiment of the present invention will be explained.
As shown in Figure 6, a solid oxide fuel cell device 1 is furnished with a control unit 110, an operating device 112 provided with operating buttons such as "ON" or "OFF" for user operation, a display device 114 for displaying various data such as a generator output value (Watts), and a notification device 116 for issuing warnings during abnormal states and the like are connected to the control unit 110. The notification device 116 may be connected to a remote control center to inform the control center of abnormal states.

Next, signals from the various sensors described below are input to the control unit 110.
First, a flammable gas detection sensor 120 detects gas leaks and is attached to the fuel cell module 2 and the auxiliary unit 4.
The purpose of the flammable gas detection sensor 120 is to detect leakage of CO in the exhaust gas, which is meant to be exhausted to the outside via the exhaust gas conduit 80 and the like, into the external housing (not shown) which covers the fuel cell module 2 and the auxiliary unit 4.
A water reservoir state detection sensor 124 detects the temperature and amount of hot water in a water heater (not shown).

An electrical power state detection sensor 126 detects current, voltage, and the like in the inverter 54 and in a distribution panel (not shown).
A power generating air flow rate detection sensor 128 detects the flow rate of power generating air supplied to the generating chamber 10.
A reforming air flow rate sensor 130 detects the flow rate of reforming air supplied to the reformer 20.
A fuel flow rate sensor 132 detects the flow rate of fuel gas supplied to the reformer 20.

A water flow rate sensor 134 detects the flow rate of pure water (steam) supplied to the reformer 20.
A water level sensor 136 detects the water level in pure water tank 26.
A pressure sensor 138 detects pressure on the upstream side outside the reformer 20.
An exhaust temperature sensor 140 detects the temperature of exhaust gas flowing into the hot water producing device 50.

As shown in Figure 3, a generating chamber temperature sensor 142 is disposed on the front surface side and rear surface side around the fuel cell assembly 12, and detects the temperature around the fuel cell stack 14 in order to estimate the temperature of the fuel cell stack 14 (i.e., of the fuel cell 84 itself).
A combustion chamber temperature sensor 144 detects the temperature in combustion chamber 18.
An exhaust gas chamber temperature sensor 146 detects the temperature of exhaust gases in the exhaust gas chamber 78.
A reformer temperature sensor 148 detects the temperature of the reformer 20 and calculates the reformer 20 temperature from the intake and exit temperatures on the reformer 20.
If the solid oxide fuel cell (SOFC) device is placed outdoors, the outside temperature sensor 150 detects the temperature of the outside atmosphere. Sensors to detect outside atmospheric humidity and the like may also be provided.
As shown in Figure 3, ignition sensors 152 are provided in several locations near the top end portion of the fuel cell assembly 12, and function to detect the temperature around the top end portion of the fuel cell assembly 12 when the ignition device 83 is ignited, and to determine the ignition state based on the temperature.

Signals from these various sensors are sent to the control unit 110; the control unit 110 sends control signals to the water flow rate regulator unit 28, the fuel flow rate regulator unit 38, the reforming air flow rate regulator unit 44, and the power generating air flow rate regulator unit 45 based on data from the sensors, and controls the flow rates in each of these units.
The control unit 110 sends control signals to the inverter 54 to control the supplied electrical power.

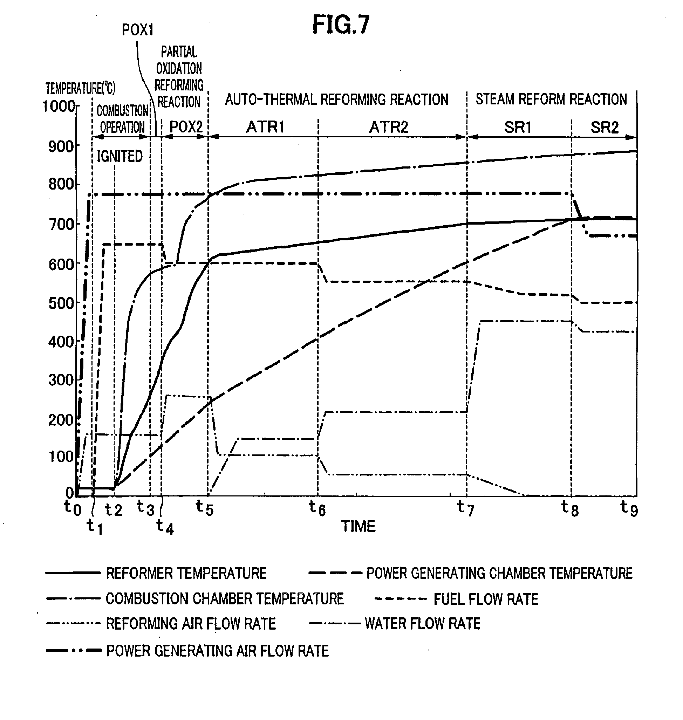

Next, referring to Figure 7, the operation of a solid oxide fuel cell (SOFC) device according to the present embodiment at the time of startup will be explained.
In order to warm up the fuel cell module 2, the operation starts in a no-load state, i.e., with the circuit which includes the fuel cell module 2 in an open state. At this point current does not flow in the circuit, therefore the fuel cell module 2 does not generate electricity.

First, reforming air is supplied from the reforming air flow rate regulator unit 44 to the reformer 20 on the fuel cell module 2. At the same time, power generating air is supplied from the generating air flow rate regulator unit 45 to an air heat exchanger 22 of the fuel cell module 2, and the power generating air reaches the generating chamber 10 and the combustion chamber 18.
Immediately thereafter, fuel gas is also supplied from the fuel flow rate regulator unit 38, and fuel gas into which reforming air is blended passes through the reformer 20, the fuel cell stack 14, and the fuel cell unit 16 to reach the combustion chamber 18.

Next, ignition is brought about by the ignition device 83, and fuel gas and air (reforming air and power generating air) supplied to the combustion chamber 18 is combusted. This combustion of fuel gas and air produces exhaust gas; the generating chamber 10 is warmed by the exhaust gas, and when the exhaust gas rises into the fuel cell module 2 sealed space 8, the fuel gas, which includes the reforming air in the reformer 20 is warm, as is the power generating air inside the air heat exchanger 22.

At this point, fuel gas into which the reforming air is blended is supplied to the reformer 20 by the fuel flow rate regulator unit 38 and the reforming air flow rate regulator unit 44, therefore the partial oxidation reforming reaction POX given by Expression (1) proceeds in the reformer 20. This partial oxidation reforming reaction POX is an exothermic reaction, and therefore has favorable starting characteristics. The fuel gas whose temperature has risen is supplied from the fuel gas supply line 64 to the bottom of the fuel cell stack 14, and by this means the fuel cell stack 14 is heated from the bottom, and the temperature of the combustion chamber 18 has risen by the combustion of the fuel gas and air, and the fuel cell stack 14 is therefore heated from the upper side such that the temperature of the fuel cell stack 14 can be raised in an essentially uniform manner in the vertical direction. Even though the partial oxidation reforming reaction POX is progressing, the ongoing combustion reaction between fuel gas and air is continued in the combustion chamber 18.

CmHn+xO₂ → aCO₂+bCO+cH₂ (1)

When the reformer temperature sensor 148 detects that the reformer 20 has reached a predetermined temperature (e.g. 600° C) after the start of the partial oxidation reforming reaction POX, a pre-blended gas of fuel gas, reforming air, and steam is applied to the reformer 20 by the water flow rate regulator unit 28, the fuel flow rate regulator unit 38, and the reforming air flow rate regulator unit 44. At this point an auto-thermal reforming reaction ATR, which makes use of both the aforementioned partial oxidation reforming reaction POX and the steam reforming reaction SR described below, proceeds in the reformer 20. This auto-thermal reforming reaction ATR can be internally thermally balanced, therefore the reaction proceeds in a thermally independent fashion inside the reformer 20. In other words, when there is a large amount of oxygen (air), heat emission by the partial oxidation reforming reaction POX dominates, and when there is a large amount of steam, the endothermic steam reforming reaction SR dominates. At this stage, the initial stage of startup has passed and some degree of elevated temperature has been achieved within the generating chamber 10, therefore even if the endothermic reaction is dominant, there will be no major drop in temperature. Also, the combustion reaction continues within the combustion chamber 18 even as the auto-thermal reforming reaction ATR proceeds.

When the reformer temperature sensor 146 detects that the reformer 20 has reached a predetermined temperature (e.g., 700° C) following the start of the auto-thermal reforming reaction ATR shown as Expression (2), the supply of reforming air by the reforming air flow rate regulator unit 44 is stopped, and the supply of steam by the water flow rate regulator unit 28 is increased. By this means, a gas containing no air and only containing fuel gas and steam is supplied to the reformer 20, where the steam reforming reaction SR of Expression (3) proceeds.

CₘHₙ+x0₂+yH₂O → aCO₂₊bCO+cH₂ (2)

CₘHₙ+x0₂+yH₂O → aCO₂₊bCO+cH₂ (3)

This steam reforming reaction SR is an endothermic reaction, therefore the reaction proceeds as a thermal balance is maintained with the heat of combustion from the combustion chamber 18. At this stage, the fuel cell module 2 is in the final stages of startup, therefore the temperature has risen to a sufficiently high level within the generating chamber 10 so that no major temperature drop is induced in the power generating chamber 10 even though an endothermic reaction is proceeding. Also, the combustion reaction continues to proceed in the combustion chamber 18 even as the steam reforming reaction SR is proceeding.

Thus, after the fuel cell module 2 has been ignited by the ignition device 83, the temperature inside the generating chamber 10 gradually rises as a result of the partial oxidation reforming reaction POX, the auto-thermal reforming reaction ATR, and the steam reforming reaction SR which proceed in that sequence. Next, when the temperature inside the generating chamber 10 and the temperature of the fuel cell 84 reach a predetermined generating temperature which is lower than the rated temperature at which the cell module 2 can be stably operated, the circuit which includes the fuel cell module 2 is closed, power generation by the fuel cell module 2 begins, and current then flows to the circuit. Generation of electricity by the fuel cell module 2 causes the fuel cell 84 to emit heat, such that the temperature of the fuel cell 84 rises. As a result, the rated temperature at which the fuel cell module 2 is operated becomes, for example, 600°C - 800°C.

Following this, fuel gas and air having respective flow rates greater than those consumed by the fuel cell 84 is applied in order to maintain the rated temperature and continue combustion inside the combustion chamber 18. Generation of electricity by the high reform-efficiency steam reforming reaction SR proceeds while electricity is being generated.

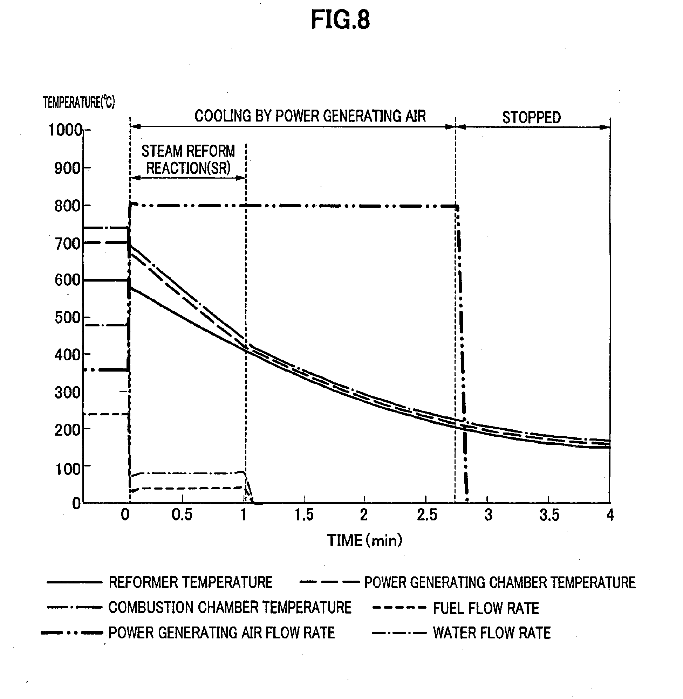

Next, referring to Figure 8, the operation upon stopping the solid oxide fuel cell (SOFC) device according to the embodiment of the present invention will be explained.
As shown in Figure 8, when stopping the operation of the fuel cell module 2, the fuel flow rate regulator unit 38 and the water flow rate regulator unit 28 are first operated to reduce the flow rates of fuel gas and steam being supplied to the reformer 20.

When stopping the operation of the fuel cell module 2, the flow rate of power generating air supplied by the power generating air flow rate regulator unit 45 into the fuel cell module 2 is being increased at the same time that the flow rates of fuel gas and steam being supplied to the reformer 20 is being reduced; the fuel cell assembly 12 and the reformer 20 are air cooled to reduce their temperature. Thereafter, when the temperature of the generating chamber reaches a predetermined temperature, e.g. 400° C, supply of the fuel gas and steam to the reformer 20 is stopped, and the steam reforming reaction SR in the reformer 20 ends. Supply of the power generating air continues until the temperature in the reformer 20 reaches a predetermined temperature, e.g. 200° C; when the predetermined temperature is reached, the supply of power generating air from the power generating air flow rate regulator unit 45 is stopped.

Thus in the embodiment of the present invention, the steam reforming reaction SR by the reformer 20 and cooling by power generating air are used in combination, therefore when the operation of the fuel cell module 2 is stopped, that operation can be stopped relatively quickly.

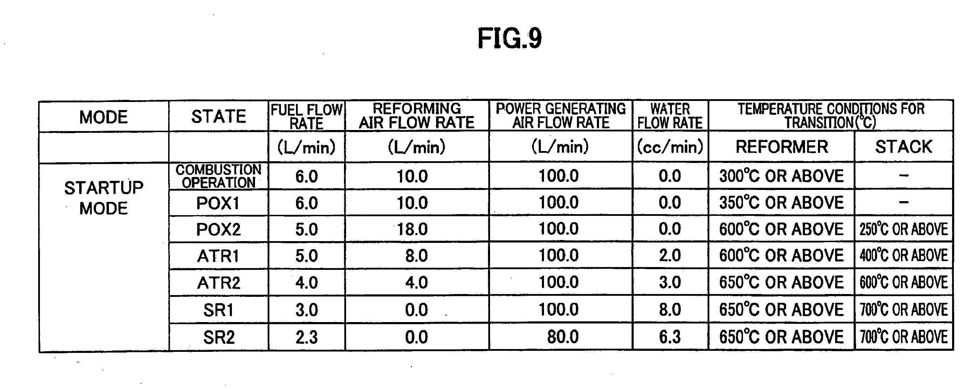

Next, referring to Figures 7 and 9, the startup processing which occurs in a solid oxide fuel cell device according to an embodiment of the present invention will be explained in detail.
When the solid oxide fuel cell device 1 is started at time t0 in Figure 7, the control unit 110 sends signals to the reforming air flow rate regulator unit 44 which serves as the reforming air supply device, and to the power generating air flow rate regulator unit 45 which serves as the power generating air supply device, thereby starting those devices and supplying reforming air and power generating air to the fuel cell module 2. Note that in the embodiment of the present invention, the flow rate of reforming air supplied when supply begins at time t0 is set at 10 L/min, and the flow rate of power generating air supplied is set at 100 L/min.

Next, at time t1, the control unit 110 sends a signal to the fuel flow rate regulator unit 38 serving as a fuel gas supply device, thereby starting the supply of fuel to the reformer 20. The fuel gas and reforming air fed into the reformer 20 are fed into each of the fuel cell units 16 via the reformer 20, the fuel gas supply line 64, and the manifold 66. The fuel gas and reforming air fed into each of the fuel cell units 16 flows out from the respective top ends of the fuel gas flow paths 98 on each of the fuel cell units 16. In the embodiment of the present invention, the flow rate of fuel gas supplied when supply begins at time t1 is set at 6 L/min (refer to the "combustion operation" state shown in Figure 9).

In addition, at time t2, the control unit 110 sends a signal to the ignition device 83, igniting the unreformed fuel gas which has flowed out of the top end of the fuel gas flow path 98 on the fuel cell units 16. This results in combustion of the fuel gas in the combustion chamber 18; the reformer 20 disposed thereabove is heated, and the temperature of the combustion chamber 18, the power generating chamber 10, and the fuel cell stack 14 disposed inside thereof also rise (refer to times t2 - t3 in Figure 7 and to the "combustion operation" state in Figure 9).
A partial oxidation reforming reaction (POX) occurs in the reformer 20 when the temperature of the reformer 20 rises to approximately 300°C as a result of heat in the reformer 20 (time t3 in Figure 7). Since the partial oxidation reforming reaction is an exothermic reaction, the reformer 20 is heated by the heat of the partial oxidation reforming reaction (see the "POX1" state in Figure 9).

Irrespective of whether all the fuel cell units 16 are completely ignited, at time t2 the time at which ignition is performed by the ignition device 83 is tentatively viewed as the "ignition timing" time. Therefore, regarding the determination of the effective ignition state, i.e., of whether all the fuel cell units 16 are fully ignited, the control unit 110 determines that all the fuel cell units 16 are fully ignited when the temperature around the top end portion of the fuel cell assembly 12 as detected by the ignition sensor 152 is greater than a predetermined temperature.
The determination of an ignited state (combustion state) by this ignition sensor 152 is effectively made within the interval between the start of the supply of fuel to the reformer 20 at time t1, through the ignition timing time t2, and up until the time t3 at which the partial oxidation reforming reaction (POX1) begins (the "combustion operation interval" below); and within the interval between the start of the POX1 at time t3, up to the time t4 at which the reaction changes to POX2 (the "POX1 interval" below).

Furthermore, when the temperature rises and the temperature of the reformer 20 reaches 350° C during the POX1 interval, the control unit 110 sends signals to the fuel flow rate regulator unit 38, reducing the flow rate of fuel supply, while signals are also sent to the reforming air flow rate regulator unit 44 to increase the flow rate of reforming air supplied (see time t4 in Figure 7).
This results in a change in the fuel supply flow rate to 5L/min, and in the reforming air supply flow rate to 18L/min (see the "POX2" state in Figure 9). These flow rates are appropriate for stably conducting the partial oxidation reforming reaction (POX2).
In other words, up until an initial temperature region at which a tentative partial oxidation reforming reaction (POX1) begins to occur, a state is created for reliable ignition of the fuel gas by increasing the proportion of fuel gas supplied, and during the combustion operation interval and the POX1 interval, the flow rate of fuel gas supplied is maintained to stabilize ignition (see the "POX1" state in Figure 9).

In particular, during the combustion operation interval and the POX1 interval, even if a determination of an ignition state is made using the ignition sensor 152, ignition is stabilized by increasing the flow rate of fuel gas to an amount greater than that in POX2, and by maintaining that supply flow rate until the end of the POX1 interval.
Furthermore, after stable ignition is achieved and the temperature rises, fuel waste is suppressed by maintaining a sufficient fuel supply flow rate required to stably generate the partial oxidation reforming reaction (see the "POX2" state in Figure 9).

Over the period starting from the combustion operation interval through the SR1 (described in detail below) interval, the flow rate of power generating air supply is maintained at a high air volume (100L/min); in particular, even if flame diffusion characteristics are increased during the combustion operation interval, which includes the ignition timing, and the top end of the fuel gas flow paths 98 on a portion of the fuel cell stack 14 fuel cell units 16 are in an ignited state, flame diffusion can be quickly induced over the entire fuel cell stack 14 to achieve complete ignition. Combustion can thus be stabilized even during the period immediately following ignition, which tends to be unstable, and the production of CO can be reliably suppressed.
Furthermore, at the time when the flow rate of power generating air is first increased (time t0-t1 in Figure 7), there is a tendency for air flow to become turbulent at the top end portion of the fuel cell assembly 12, but reliable ignition can be secured by waiting for a stable air flow period before igniting (time t2 in Figure 7).

During the combustion operation interval and the POX1 interval when a tentative partial oxidation reform reaction (POX1) is being performed, air flow rate at the top end portion of the fuel assembly 12 is stabilized by holding both the reforming air and the generating air supply flow rates fixed without variation.
Furthermore, the reforming air supply flow rate during the combustion operation interval and the POX1 interval is maintained at a level below the power generating air supply flow rate and below the flow rate of reforming air used for a stable partial oxidation reforming reaction (POX2), such that fast flame diffusion characteristics can be achieved and combustion can be stabilized after ignition so that combustion is stable even in the unstable condition which follows ignition, and the production of CO can be suppressed.
During the combustion operation interval which includes the ignition timing and the POX1 interval, reliable ignition characteristics can be assured in the top end portion of the fuel cell assembly 12, which has poor ignition characteristics, by concentrating fuel gas by reducing flow rate of reforming air below that of POX2 and increasing flow rate of fuel gas above that of ATR2.

Next, at time t5 in Fig. 7, when the temperature of the reformer 20 reaches 600°C or above and the temperature of the fuel cell units 16 reaches 250°C or above, the control unit 110 sends a signal to the reforming air flow rate regulator unit 44, reducing the flow rate of reforming air supply, and sends a signal to the water flow regulator unit 28 serving as the water supply device, starting the supply of water. This result in a change in the flow rate of reforming air supply to 8L/min and in the flow rate of water supplied to 2cc/min (see the "ATR1" state in Figure 9). The steam reforming reaction is also caused to occur in the reformer 20 by the introduction of water (steam) into the reformer 20. In other words, in the "ATR1" state in Figure 9, an auto-thermal reforming reaction (ATR) takes place, which is a blend of the partial oxidation reforming reaction and the steam reforming reaction.

In the embodiment of the present invention, the temperature of the fuel cells 16 is measured by a generating chamber temperature sensor 142, which is a temperature detection device disposed inside the power generating chamber 10. Precisely speaking, the temperature inside the power generating chamber 10 and the temperature of the fuel cell units are not the same, but the temperature detected by the power generating chamber temperature sensor 142 reflects the temperature of the fuel cell units 16, and the temperature of the fuel cell units 16 can be grasped using the power generating chamber temperature sensor 142 disposed inside the power generating chamber 10. Note that in the present specification, the term "fuel cell unit temperature" means a temperature measured by any preferred sensor which indicates a value reflecting the temperature of the fuel cell units.

Furthermore, at time t6 in Figure 7, when the temperature of the reformer 20 reaches 600°C or above and the temperature of the fuel cell units 16 reaches 400°C or above, the control unit 110 sends a signal to the fuel flow rate regulator unit 38 to reduce the flow rate of fuel supplied.
The control unit 110 also sends a signal to the reforming air flow rate regulator unit 44 to reduce the flow rate of reforming air supplied, and sends a signal to the water flow rate regulator unit 28 to increase the flow rate of water supplied. This results in a change of fuel gas flow rate supplied to 4L/min and a change in the flow rate of reforming air supplied to 4L/min; the water supply flow rate is set to be 3cc/min (see the "ATR2" state in Figure 9). The decrease in the flow rate of reforming air supplied and the increase in the flow rate of water supplied results in a decrease in the proportion of the partial oxidation reforming reaction and an increase in the proportion of the steam reforming reaction within the reformer 20.

Next, at time t7 in Figure 7, when the temperature of the reformer 20 reaches 650°C or above and the temperature of the fuel cell units 16 reaches 600°C or above, the control unit 110 sends a signal to the reforming air flow rate regulator unit 44, stopping the supply of reforming air.
The control unit 110 also sends a signal to the fuel flow rate regulator unit 38 reducing the flow rate of fuel gas supplied, and sends a signal to the water flow rate regulator unit 28 increasing the flow rate of water supplied. This results in a change in the fuel gas supply flow rate to 3L/min, and a change in the water supply flow rate to 8cc/min (see the "SR1" state in Fig. 9). Stopping the supply of reforming air stops the partial oxidation reaction in the reformer 20 so that an SR is started, in which only the steam reforming reaction occurs.

Furthermore, at time t8 in Figure 7, when the temperature in the reformer 20 reaches 650°C or above and the temperature in the fuel cell units reaches 700°C or above, the control unit 110 sends a signal to the fuel flow rate regulator unit 38 to reduce the flow rate of fuel gas supplied, and sends a signal to the water flow rate regulator unit 28 to reduce the flow rate of water supplied.
The control unit 110 also sends a signal to the power generating air flow rate regular unit 45 to reduce the flow rate of power generating air supplied. This results in a change in the fuel gas supply flow rate to the power generation standby fuel gas supply flow rate of 2.3L/min, as well as a change in the water supply flow rate to 6.3cc/min, and to a power generating air supply flow rate of 80L/min (see the "SR2" state in Figure 9).

After the control unit 110 has maintained these supply flow rates for a predetermined power generation transition interval or greater, electrical power is caused to be output from the fuel cell module 2 to the inverter 54 to start power generation (see time t9 in Figure 7).

Using the solid oxide fuel cell (SOFC) device of an embodiment of the present invention described above, even at the top end of the fuel cell assembly 12 where ignition is difficult to induce, direct ignition and flame diffusion are facilitated at the time of startup prior to the start of power generation by the fuel cell module 2, by increasing to a level greater than what occurs in subsequent intervals the flow rate of fuel gas during the combustion operation interval, which includes the ignition timing and the period before and after the ignition timing, and during the POX1 interval during which POX1 is conducted. As a result, the ignition of any of the fuel cell units 16 within the fuel cell stack 14 allows for reliable flame diffusion to the entire fuel cell stack 14. Increasing the flow rate of fuel gas to a level greater than that in subsequent intervals and holding fixed the supply state during the combustion operation interval, which includes the ignition timing and the period before and after the ignition timing, and during the POX1 interval, enables changes in fuel gas flow rate to be suppressed and stabilization to be achieved, thus greatly facilitating ignition.
Also, as the result of the above, ignition problems can be reliably suppressed and flameout or blow out subsequent to ignition can be reliably prevented using a simple structure, without employing countermeasures such as modifying the fuel cell unit 16 structure itself to facilitate ignition.

Also, using the solid oxide fuel cell (SOFC) device of the embodiment of the present invention, fuel gas can be increased and a stable supply assured during a predetermined interval during which POX1 is carried out following a determination by the ignition sensor 152 of an ignition state during the combustion operation interval, thus enabling reliable ignition to be achieved.

Furthermore, in the solid oxide fuel cell (SOFC) device of the embodiment of the present invention, during the combustion operation interval and the POX1 interval in which tentative partial oxidation reforming (POX1) is being conducted in the reformer 20, a state of increased fuel gas can be held during the entire interval during which ignition is unstable by maintaining a state of increased fuel gas flow rate for the combustion operation, thereby reliably achieving ignition. Even if a portion of the fuel cell units 16 in the fuel cell stack 14 are in an ignited state, flame diffusion can be quickly induced over the entire fuel cell stack 14 to achieve complete ignition, thereby stabilizing combustion even during the period immediately after ignition which tends to be unstable, and production of CO can be reliably suppressed.

Additionally, in the solid oxide fuel cell (SOFC) device of the embodiment of the present invention, flame diffusion characteristics can be increased, and fast ignition achieved, at the time of startup before power generation by the fuel cell module 2 begins, by securing a predetermined large flow rate of power generating air starting from the combustion operation interval, which includes the ignition timing and the period before and after the ignition timing, through the interval in which SR1 is conducted, so that even if a portion of the fuel cell units 16 in the fuel cell stack 14 are in an ignited state, flame can be quickly diffused to the entire fuel cell stack 14 to achieve complete ignition. Also, there is a tendency for the large flow rate of power generating air supplied at the top end portion of the fuel cell assembly 12 to be turbulent at the beginning, but reliable ignition can be secured by maintaining a fixed predetermined large flow rate of power generating air during the combustion operation interval, which includes ignition timing, and waiting for a stable air flow rate period before igniting.

In the solid oxide fuel cell (SOFC) device of the embodiment of the present invention, the air flow in the upper portion of the fuel cell assembly 12 can be stabilized and reliable ignition characteristics can be assured, by holding constant the supply flow rates of reforming air and power generating air during combustion operation interval and the interval during which tentative partial oxidation reforming (POX1) is being conducted in the reformer 20.

In addition, in the solid oxide fuel cell (SOFC) device of the embodiment of the present invention, flame diffusion characteristics can be maintained by holding the reforming air supply flow rate at a level below that of the power generating air and is less than the flow rate of reforming air used in stable partial oxidation reforming (POX2), and by maintaining generating air in a plentiful state during the combustion operation interval and the interval during which tentative partial oxidation reforming (POX1) is being conducted in the reformer 20. Also, especially around the time of ignition during the combustion operation interval, concentrating the fuel gas through a decrease in reforming air when the fuel gas is increased assures reliable ignition characteristics at the top end portion of the fuel cell assembly 12, where ignition characteristics are poor.

As one example of the solid oxide fuel cell (SOFC) device according to the above-described embodiment of the present invention, it is explained a startup process in which the flow rate of power generating air supply is maintained at a high volume (100L/min) over the time from the combustion operation interval through the interval in which SR1 is conducted, but the fuel cell is not limited to such a startup process, and can also be applied to other startup processes.
For example, during the combustion operation interval in which the supply flow rate of fuel gases is increased, and during the POX1 interval, flame diffusion characteristics may also be increased to assure complete ignition at the top portion of the fuel cell assembly 12 by supplying a fixed flow rate of power generating air in a predetermined large flow rate which is greater than the flow rate used in other intervals.

Although the present invention has been explained with reference to specific, preferred embodiments, one of ordinary skilled in the art will recognize that modifications and improvements can be made while remaining within the scope of the present invention. The scope of the present invention is determined solely by appended claims.

## Claims

1. A solid oxide fuel cell device (1) for generating power by reacting fuel gas and air, comprising:
- a fuel cell assembly (12) furnished with multiple solid electrolyte-type fuel cells (16), and having a top portion and a bottom portion below the top portion;
- a reformer (20) disposed above the fuel cell assembly (12) for steam reforming fuel gas and supplying the fuel gas to the fuel cell assembly (12);
- means (30, 38) for supplying the fuel gas to the reformer (20);
- means (24-28) for producing pure water and supplying the pure water to the reformer (20);
- means (40-44) for supplying reforming air to the reformer (20);
- means (45) for supplying power generating air to the fuel cell assembly (12);
- means (83) for igniting and combusting the fuel gas supplied to the bottom portion of the fuel cell assembly (12) and reaching the top portion of the fuel cell assembly (12); and
- a control section (52; 110) controlling the fuel gas supply means (30-38), the water supply means (24-28), the reforming air supply means (40-44), the power generating air supply means (45), and the igniting means (83) to conduct a combustion operation to ignite and combust the fuel gas and the reforming air by the ignition means (83), then supply the fuel gas and the reforming air into the reformer (20) to conduct a partial oxidation reforming reaction (POX) operation, then supply the fuel gas, the reforming air and water into the reformer (20) to conduct an auto-thermal reforming reaction (ATR) operation, and then supply the fuel gas and water into the reformer (20) to conduct a steam reforming reaction (SR) operation, thereby starting the solid oxide fuel cell device (1);
wherein the control section (52; 110) controls the fuel gas supply means (30-38) to hold constant the supply flow rate of fuel gas during a predetermined interval containing an ignition timing, controls the ignition means (83) to ignite the fuel gas at the middle of the predetermined interval, and controls the fuel gas supply means (30-38) to reduce the supply flow rate of fuel gas after an elapse of the predetermined interval.

2. The solid oxide fuel cell device according to claim 1, wherein the solid oxide fuel cell device (1) further comprises means (152) for determining whether ignition has occurred in the fuel cell assembly (12), wherein the predetermined interval includes a first predetermined time starting before the time of the predetermined ignition timing and includes a second predetermined time after the determination by the ignition determining means (152) that ignition has occurred.

3. The solid oxide fuel cell device according to claim 1, wherein the predetermined interval includes an interval up until the temperature inside the reformer (20) reaches or exceeds a predetermined temperature at which the partial oxidation reforming reaction (POX) operation is possible.

4. The solid oxide fuel cell device according to claim 1, wherein the control section (52; 110) controls the power generating air supply means (45) to supply the power generating air during intervals of the combustion operation, the partial oxidation reforming reaction (POX) operation, the auto-thermal reforming reaction (ATR) operation, and the steam reforming reaction (SR) operation, and to supply a maximum and fixed amount of power generating air during at least the predetermined interval.

5. The solid oxide fuel cell device according to claim 1, wherein the control section (52; 110) controls the reforming air supply means (40-44) and the power generating air supply means (45) to hold constant the supply flow rates of reforming air and power generating air during the interval of the combustion operation.

6. The solid oxide fuel cell device according to claim 5, wherein the control section (52; 110) controls the reforming air supply means (40-44) and the power generating air supply means (45) so that the supply flow rate of reforming air during the interval of the combustion operation is less than the supply flow rate of power generating air, and the supply flow rate of reforming air during the interval of the combustion operation is less than the supply flow rate of reforming air during the interval of the POX operation.

## Patentansprüche

1. Festoxidbrennstoffzellenvorrichtung (1) zum Erzeugen von Leistung durch Reaktion eines Brennstoffgases mit Luft, wobei die Festoxidbrennstoffzellenvorrichtung aufweist:
- eine Brennstoffzellenanordnung (12), die mit mehreren Brennstoffzellen (16) vom Fest-Elektrolyt-Typ ausgestattet ist, und mit einem oberen Abschnitt und mit einem unteren Abschnitt, der unterhalb des oberen Abschnittes angeordnet ist;
- einen Reformer (20), der oberhalb der Brennstoffzellenanordnung (12) angeordnet ist, zum Dampfreformieren von Brennstoffgas und zum Zuführen des Brennstoffgases zu der Brennstoffzellenanordnung (12);
- Mittel (30, 38) zum Zuführen des Brennstoffgases zu dem Reformer (20);
- Mittel (24-28) zum Erzeugen von reinem Wasser und zum Zuführen des reinen Wassers zu dem Reformer (20);
- Mittel (40-44) zum Zuführen von reformierender Luft zu dem Reformer (20);
- Mittel (45) zum Zuführen von leistungserzeugender Luft zu der Brennstoffzellenanordnung (12);
- Mittel (83) zum Zünden und Verbrennen des Brennstoffgases, das zu dem unteren Abschnitt der Brennstoffzellenanordnung (12) zugeführt ist und den oberen Abschnitt der Brennstoffzellenanordnung (12) erreicht;
- einen Steuerabschnitt (52; 110), der die Brennstoffgaszuführmittel (30-38), die Wasserzuführmittel (24-28), die Zuführmittel (40-44) für reformierende Luft, die Zuführmittel (45) für leistungserzeugende Luft und die Zündmittel (83) steuert, um einen Verbrennungsbetrieb durchzuführen, um das Brennstoffgas und die reformierende Luft mittels der Zündmittel (83) zu zünden und zu verbrennen, anschließend das Brennstoffgas und die reformierende Luft in den Reformer (20) zuzuführen, um einen Betrieb mit reformierender Partialoxidationsreaktion (POX) durchzuführen, anschließend das Brennstoffgas, die reformierende Luft und Wasser in den Reformer (20) zuzuführen, um einen Betrieb mit einer reformierenden Auto-Thermal-Reaktion (ATR) durchzuführen, und anschließend das Brennstoffgas und Wasser in den Reformer (20) zuzuführen, um einen Betrieb mit dampfreformierender Reaktion (SR) durchzuführen, wodurch die Festoxidbrennstoffzellenvorrichtung (1) gestartet wird;
wobei der Steuerabschnitt (52; 110) die Brennstoffgaszuführmittel (30-38) steuert, um die Zuführströmungsrate von Brennstoffgas während eines vorbestimmten Intervalls konstant zu halten, das ein Zünd-Timing beinhaltet, die Zündmittel (83) steuert, um das Brennstoffgas bei der Mitte des vorbestimmten Intervalls zu zünden und die Brennstoffgaszuführmittel (30-38) steuert, um die Zuführströmungsrate von Brennstoffgas nach dem Ablauf des vorbestimmten Intervalls zu reduzieren.

2. Festoxidbrennstoffzellenvorrichtung nach Anspruch 1, wobei die Festoxidbrennstoffzellenvorrichtung (1) ferner Mittel (152) zum Bestimmen aufweist, ob in der Brennstoffzellenanordnung (12) eine Zündung stattgefunden hat, wobei das vorbestimmte Intervall eine erste vorbestimmte Zeit beinhaltet, die vor der Zeit des vorbestimmten Zünd-Timings beginnt, und eine zweite vorbestimmte Zeit nach der Bestimmung durch die Zündbestimmungsmittel (152) beinhaltet, dass eine Zündung stattgefunden hat.

3. Festoxidbrennstoffzellenvorrichtung nach Anspruch 1, wobei das vorbestimmte Intervall ein Intervall beinhaltet, bis zu dem die Temperatur innerhalb des Reformers (20) eine vorbestimmte Temperatur erreicht oder überschreitet, bei der der Betrieb mit der reformierenden Partialoxidationsreaktion (POX) möglich ist.

4. Festoxidbrennstoffzellenvorrichtung nach Anspruch 1, wobei der Steuerabschnitt (52; 110) die Zuführmittel (45) zum Zuführen von leistungserzeugender Luft während Intervallen des Verbrennungsbetriebes, des Betriebes mit reformierender Partialoxidationsreaktion (POX), des Betriebes mit reformierender Auto-Thermal-Reaktion (ATR) und des Betriebes mit dampfreformierender Reaktion (SR) steuert, um leistungserzeugende Luft zuzuführen, und um eine maximale und festgelegte Menge an leistungserzeugender Luft zumindest während des vorbestimmten Intervalls zuzuführen.

5. Festoxidbrennstoffzellenvorrichtung nach Anspruch 1, wobei der Steuerabschnitt (52; 110) die Zuführmittel (40-44) für reformierende Luft und die Zuführmittel (45) für leistungserzeugende Luft steuert, um die Zuführströmungsraten für reformierende Luft und für leistungserzeugende Luft während des Intervalls des Verbrennungsbetriebes konstant zu halten.

6. Festoxidbrennstoffzellenvorrichtung nach Anspruch 5, wobei der Steuerabschnitt (52; 110) die Zuführmittel (40-44) für reformierende Luft und die Zuführmittel (45) für leistungserzeugende Luft steuert, so dass die Zuführströmungsrate für reformierende Luft während des Intervalls des Verbrennungsbetriebes kleiner ist als die Zuführströmungsrate für leistungserzeugende Luft, und so, dass die Zuführströmungsrate für reformierende Luft während des Intervalls des Verbrennungsbetriebes geringer ist als die Zuführströmungsrate für reformierende Luft während des Intervalls des POX-Betriebes.

## Revendications

1. Dispositif (1) de pile à combustible à oxyde solide destiné à générer de l'électricité en faisant réagir du gaz combustible et de l'air, comportant :
- un ensemble (12) de piles à combustible muni de multiples piles (16) à combustible du type à électrolyte solide, et comprenant une partie supérieure et une partie inférieure au-dessous de la partie supérieure ;
- un reformeur (20) disposé au-dessus de l'ensemble (12) de piles à combustible pour reformer à la vapeur un gaz combustible et fournir le gaz combustible à l'ensemble (12) de piles à combustible ;
- des moyens (30, 38) servant à fournir le gaz combustible au reformeur (20) ;
- des moyens (24-28) servant à produire de l'eau pure et à fournir l'eau pure au reformeur (20) ;
- des moyens (40-44) servant à foumir de l'air de reformage au reformeur (20) ;
- un moyen (45) servant à fournir de l'air de génération d'électricité à l'ensemble (12) de piles à combustible ;
- un moyen (83) servant à allumer et à brûler le gaz combustible alimentant la partie inférieure de l'ensemble (12) de piles à combustible et atteignant la partie supérieure de l'ensemble (12) de piles à combustible ; et
- une section (52 ; 110) de commande commandant les moyens (30-38) d'alimentation en gaz combustible, les moyens (24-28) d'alimentation en eau, les moyens (40-44) d'alimentation en air de reformage, le moyen (45) d'alimentation en air de génération d'électricité et le moyen (83) d'allumage pour réaliser une opération de combustion afin d'assurer l'allumage et la combustion du gaz combustible et de l'air de reformage à l'aide du moyen (83) d'allumage, puis d'introduire le gaz combustible et l'air de reformage dans le reformeur (20) pour réaliser une opération de réaction de reformage par oxydation partielle (POX), puis d'introduire le gaz combustible, l'air de reformage et l'eau dans le reformeur (20) pour réaliser une opération de réaction de reformage autothermique (ATR), puis d'introduire le gaz combustible et l'eau dans le reformeur (20) pour réaliser une opération de réaction de reformage à la vapeur (SR), démarrant ainsi le dispositif (1) de pile à combustible à oxyde solide ;
la section (52; 110) de commande commandant les moyens (30-38) d'alimentation en gaz combustible de façon à maintenir constant le débit d'alimentation en gaz combustible pendant un intervalle prédéterminé contenant une chronologie d'allumage, commandant le moyen (83) d'allumage de façon à allumer le gaz combustible au milieu de l'intervalle prédéterminé et commandant les moyens (30-38) d'alimentation en gaz combustible de façon à réduire le débit d'alimentation en gaz combustible après expiration de l'intervalle prédéterminé.

2. Dispositif de pile à combustible à oxyde solide selon la revendication 1, le dispositif (1) de pile à combustible à oxyde solide comportant en outre un moyen (152) servant à déterminer si l'allumage a eu lieu dans l'ensemble (12) de piles à combustible, l'intervalle prédéterminé comprenant une première durée prédéterminée commençant avant l'instant de la chronologie prédéterminée d'allumage et comprenant une deuxième durée prédéterminée après que le moyen (152) de déterminarion d'allumage a déterminé que l'allumage a eu lieu.

3. Dispositif de pile à combustible à oxyde solide selon la revendication 1, l'intervalle prédéterminé comprenant un intervalle allant jusqu'à l'instant où la température à l'intérieur du reformeur (20) atteint ou dépasse une temperature prédéterminée à laquelle l'opérarion de réaction de reformage par oxydation partielle (POX) est possible.

4. Dispositif de pile à combustible à oxyde solide selon la revendication 1, la section (52 ; 110) de commande commandant le moyen (45) d'alimentation en air de génération d'électricité de façon à fournir l'air de génération d'électricité pendant les intervalles de l'opération de combustion, de l'opération de réaction de reformage par oxydation partielle (POX), de l'opération de réaction de reformage autothermique (ATR) et de l'opération de réaction de reformage à la vapeur (SR) et à fournir une quantité maximale et fixée d'air de génération d'électricité pendant au moins l'intervalle prédéterminé.

5. Dispositif de pile à combustible à oxyde solide selon la revendication 1, la section (52 ; 110) de commande commandant les moyens (40-44) d'alimentation en air de reformage et le moyen (45) d'alimentation en air de génération d'électricité de façon à maintenir constants les débits d'alimentation en air de reformage et en air de génération d'électricité pendant l'intervalle de l'opération de combustion.

6. Dispositif de pile à combustible à oxyde solide selon la revendication 5, la section (52 ; 110) de commande commandant les moyens (40-44) d'alimentation en air de reformage et le moyen (45) d'alimentation en air de génération d'électricité de telle façon que le débit d'alimentation en air de reformage pendant l'intervalle de l'opération de combustion soit inférieur au débit d'alimentation en air de génération d'électricité et que le débit d'alimentation en air de reformage pendant l'intervalle de l'opération de combustion soit inférieur au débit d'alimentarion en air de reformage pendant l'intervalle de l'opération de POX.
